# EUROPEAN PATENT APPLICATION

(11) **EP 4 390 707 A1**
(43) Date of publication of application: **26.06.2024**
(21) Application number: 23195422.3
(22) Date of filing: 05.09.2023
(51) Int. Cl.: G06F 12/084, G06F 12/1009

(54) **APPARATUS AND METHOD FOR PROBABILISTIC CACHE REPLACEMENT FOR ACCELERATING ADDRESS TRANSLATION**

(30) Priority: 23.12.2022 US 202218087887
(71) Applicant: INTEL Corporation, Santa Clara, CA 95054 (US)
(72) Inventor: RAKSHIT, Joydeep, 560066 Bengaluru (IN); NORI, Anant Vithal, 560103 Banglore (IN); SUBRAMONEY, Sreenivas, 560103 Bangalore (IN); ALAM, Hanna, 1387200 Jish (IL); NUZMAN, Joseph, 34381 Haifa (IL)
(74) Representative: Samson & Partner Patentanwälte mbB

(57) **Abstract**

Apparatus and method for probabilistic cacheline replacement for accelerating address translation. For example, one embodiment of a processor comprises: a plurality of cores, each core to process instructions; a cache to be shared by a subset of the plurality of cores, the cache comprising an N-way set associative cache for storing page table entry (PTE) cachelines and non-PTE cachelines; and a cache manager to implement a PTE-aware eviction policy for evicting cachelines from the cache, the PTE-aware eviction policy to cause a reduction of evictions of PTE cachelines during non-PTE cacheline fills.

## Description

### BACKGROUND

### Field of the Invention

This invention relates generally to the field of computer processors. More particularly, the invention relates to an apparatus and method for probabilistic cache replacement for address translation acceleration. S

### Description of the Related Art

An instruction set, or instruction set architecture (ISA), is the part of the computer architecture related to programming, including the native data types, instructions, register architecture, addressing modes, memory architecture, interrupt and exception handling, and external input and output (I/O). It should be noted that the term "instruction" generally refers herein to macro-instructions - that is instructions that are provided to the processor for execution - as opposed to micro-instructions or micro-ops - that is the result of a processor's decoder decoding macro-instructions. The micro-instructions or micro-ops can be configured to instruct an execution unit on the processor to perform operations to implement the logic associated with the macro-instruction.

The ISA is distinguished from the microarchitecture, which is the set of processor design techniques used to implement the instruction set. Processors with different microarchitectures can share a common instruction set. For example, Intel^{®} Pentium 4 processors, Intel^{®} Core^{™} processors, and processors from Advanced Micro Devices, Inc. of Sunnyvale CA implement nearly identical versions of the x86 instruction set (with some extensions that have been added with newer versions), but have different internal designs. For example, the same register architecture of the ISA may be implemented in different ways in different microarchitectures using well-known techniques, including dedicated physical registers, one or more dynamically allocated physical registers using a register renaming mechanism (e.g., the use of a Register Alias Table (RAT), a Reorder Buffer (ROB) and a retirement register file). Unless otherwise specified, the phrases register architecture, register file, and register are used herein to refer to that which is visible to the software/programmer and the manner in which instructions specify registers. Where a distinction is required, the adjective "logical," "architectural," or "software visible" will be used to indicate registers/files in the register architecture, while different adjectives will be used to designate registers in a given microarchitecture (e.g., physical register, reorder buffer, retirement register, register pool).

### BRIEF DESCRIPTION OF THE DRAWINGS

A better understanding of the present invention can be obtained from the following detailed description in conjunction with the following drawings, in which:

A better understanding of the present invention can be obtained from the following detailed description in conjunction with the following drawings, in which:
**FIG. 1** illustrates an example computer system architecture;
**FIG. 2** illustrates a processor comprising a plurality of cores;
**FIG. 3A** illustrates a plurality of stages of a processing pipeline;
**FIG. 3B** illustrates details of one embodiment of a core;
**FIG. 4** illustrates execution circuitry in accordance with one embodiment;
**FIG. 5** illustrates one embodiment of a register architecture;
**FIG. 6** illustrates one example of an instruction format;
**FIG. 7** illustrates addressing techniques in accordance with one embodiment;
**FIG. 8** illustrates one embodiment of an instruction prefix;
FIGS. 9A-D illustrate embodiments of how the R, X, and B fields of the prefix are used;
FIGS. 10A-B illustrate examples of a second instruction prefix;
**FIG. 11** illustrates payload bytes of one embodiment of an instruction prefix;
**FIG. 12** illustrates instruction conversion and binary translation implementations;
**FIG. 13** illustrates a processor architecture for implementing embodiments of the invention;
**FIG. 14** illustrates an example L2 cache in accordance with embodiments of the invention;
**FIG. 15** illustrates a method in accordance with embodiments of the invention; and
**FIG. 16** illustrates an example way mask, least recently used (LRU) counters, and LRU eviction candidates.

### DETAILED DESCRIPTION

In the following description, for the purposes of explanation, numerous specific details are set forth in order to provide a thorough understanding of the embodiments of the invention described below. It will be apparent, however, to one skilled in the art that the embodiments of the invention may be practiced without some of these specific details. In other instances, well-known structures and devices are shown in block diagram form to avoid obscuring the underlying principles of the embodiments of the invention.

### Exemplary Computer Architectures

Detailed below are describes of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

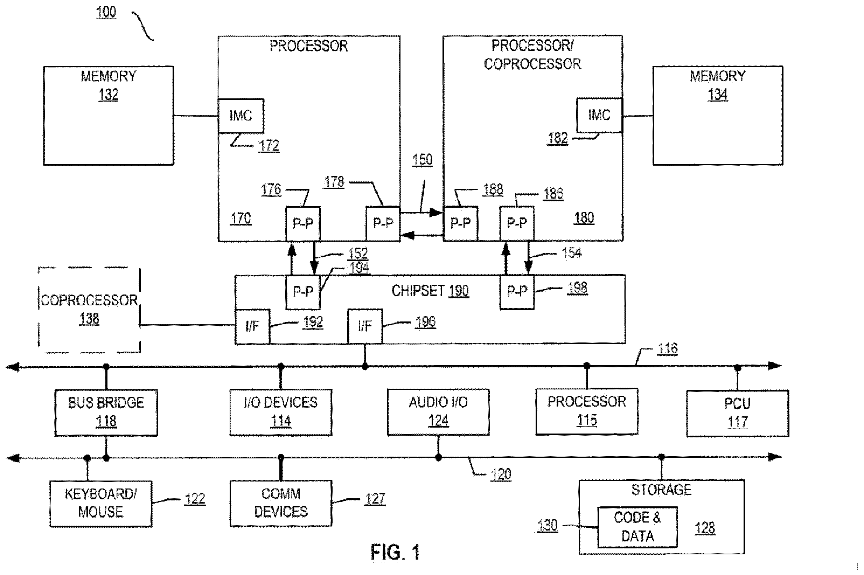

**FIG. 1** illustrates embodiments of an exemplary system. Multiprocessor system 100 is a point-to-point interconnect system and includes a plurality of processors including a first processor 170 and a second processor 180 coupled via a point-to-point interconnect 150. In some embodiments, the first processor 170 and the second processor 180 are homogeneous. In some embodiments, first processor 170 and the second processor 180 are heterogenous.

Processors 170 and 180 are shown including integrated memory controller (IMC) units circuitry 172 and 182, respectively. Processor 170 also includes as part of its interconnect controller units point-to-point (P-P) interfaces 176 and 178; similarly, second processor 180 includes P-P interfaces 186 and 188. Processors 170, 180 may exchange information via the point-to-point (P-P) interconnect 150 using P-P interface circuits 178, 188. IMCs 172 and 182 couple the processors 170, 180 to respective memories, namely a memory 132 and a memory 134, which may be portions of main memory locally attached to the respective processors.

Processors 170, 180 may each exchange information with a chipset 190 via individual P-P interconnects 152, 154 using point to point interface circuits 176, 194, 186, 198. Chipset 190 may optionally exchange information with a coprocessor 138 via a high-performance interface 192. In some embodiments, the coprocessor 138 is a special-purpose processor, such as, for example, a high-throughput MIC processor, a network or communication processor, compression engine, graphics processor, GPGPU, embedded processor, or the like.

A shared cache (not shown) may be included in either processor 170, 180 or outside of both processors, yet connected with the processors via P-P interconnect, such that either or both processors' local cache information may be stored in the shared cache if a processor is placed into a low power mode.

Chipset 190 may be coupled to a first interconnect 116 via an interface 196. In some embodiments, first interconnect 116 may be a Peripheral Component Interconnect (PCI) interconnect, or an interconnect such as a PCI Express interconnect or another I/O interconnect. In some embodiments, one of the interconnects couples to a power control unit (PCU) 117, which may include circuitry, software, and/or firmware to perform power management operations with regard to the processors 170, 180 and/or co-processor 138. PCU 117 provides control information to a voltage regulator to cause the voltage regulator to generate the appropriate regulated voltage. PCU 117 also provides control information to control the operating voltage generated. In various embodiments, PCU 117 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 117 is illustrated as being present as logic separate from the processor 170 and/or processor 180. In other cases, PCU 117 may execute on a given one or more of cores (not shown) of processor 170 or 180. In some cases, PCU 117 may be implemented as a microcontroller (dedicated or general-purpose) or other control logic configured to execute its own dedicated power management code, sometimes referred to as P-code. In yet other embodiments, power management operations to be performed by PCU 117 may be implemented externally to a processor, such as by way of a separate power management integrated circuit (PMIC) or another component external to the processor. In yet other embodiments, power management operations to be performed by PCU 117 may be implemented within BIOS or other system software.

Various I/O devices 114 may be coupled to first interconnect 116, along with an interconnect (bus) bridge 118 which couples first interconnect 116 to a second interconnect 120. In some embodiments, one or more additional processor(s) 115, such as coprocessors, high-throughput MIC processors, GPGPU's, accelerators (such as, e.g., graphics accelerators or digital signal processing (DSP) units), field programmable gate arrays (FPGAs), or any other processor, are coupled to first interconnect 116. In some embodiments, second interconnect 120 may be a low pin count (LPC) interconnect. Various devices may be coupled to second interconnect 120 including, for example, a keyboard and/or mouse 122, communication devices 127 and a storage unit circuitry 128. Storage unit circuitry 128 may be a disk drive or other mass storage device which may include instructions/code and data 130, in some embodiments. Further, an audio I/O 124 may be coupled to second interconnect 120. Note that other architectures than the point-to-point architecture described above are possible. For example, instead of the point-to-point architecture, a system such as multiprocessor system 100 may implement a multi-drop interconnect or other such architecture.

### Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die as the described CPU (sometimes referred to as the application core(s) or application processor(s)), the above described coprocessor, and additional functionality. Exemplary core architectures are described next, followed by descriptions of exemplary processors and computer architectures.

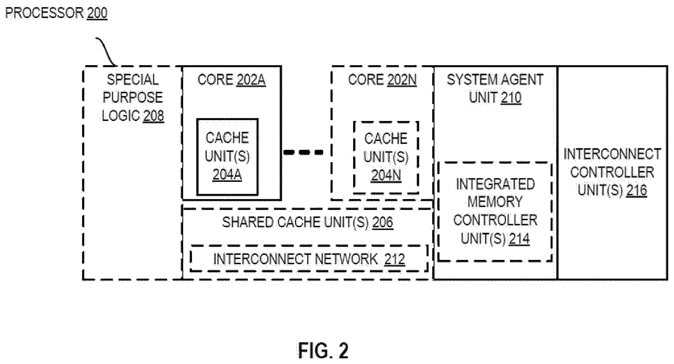

**FIG. 2** illustrates a block diagram of embodiments of a processor 200 that may have more than one core, may have an integrated memory controller, and may have integrated graphics. The solid lined boxes illustrate a processor 200 with a single core 202A, a system agent 210, a set of one or more interconnect controller units circuitry 216, while the optional addition of the dashed lined boxes illustrates an alternative processor 200 with multiple cores 202(A)-(N), a set of one or more integrated memory controller unit(s) circuitry 214 in the system agent unit circuitry 210, and special purpose logic 208, as well as a set of one or more interconnect controller units circuitry 216. Note that the processor 200 may be one of the processors 170 or 180, or co-processor 138 or 115 of **FIG. 1****.**

Thus, different implementations of the processor 200 may include: 1) a CPU with the special purpose logic 208 being integrated graphics and/or scientific (throughput) logic (which may include one or more cores, not shown), and the cores 202(A)-(N) being one or more general purpose cores (e.g., general purpose in-order cores, general purpose out-of-order cores, or a combination of the two); 2) a coprocessor with the cores 202(A)-(N) being a large number of special purpose cores intended primarily for graphics and/or scientific (throughput); and 3) a coprocessor with the cores 202(A)-(N) being a large number of general purpose in-order cores. Thus, the processor 200 may be a general-purpose processor, coprocessor or special-purpose processor, such as, for example, a network or communication processor, compression engine, graphics processor, GPGPU (general purpose graphics processing unit circuitry), a high-throughput many integrated core (MIC) coprocessor (including 30 or more cores), embedded processor, or the like. The processor may be implemented on one or more chips. The processor 200 may be a part of and/or may be implemented on one or more substrates using any of a number of process technologies, such as, for example, BiCMOS, CMOS, or NMOS.

A memory hierarchy includes one or more levels of cache unit(s) circuitry 204(A)-(N) within the cores 202(A)-(N), a set of one or more shared cache units circuitry 206, and external memory (not shown) coupled to the set of integrated memory controller units circuitry 214. The set of one or more shared cache units circuitry 206 may include one or more mid-level caches, such as level 2 (L2), level 3 (L3), level 4 (L4), or other levels of cache, such as a last level cache (LLC), and/or combinations thereof. While in some embodiments ring-based interconnect network circuitry 212 interconnects the special purpose logic 208 (e.g., integrated graphics logic), the set of shared cache units circuitry 206, and the system agent unit circuitry 210, alternative embodiments use any number of well-known techniques for interconnecting such units. In some embodiments, coherency is maintained between one or more of the shared cache units circuitry 206 and cores 202(A)-(N).

In some embodiments, one or more of the cores 202(A)-(N) are capable of multi-threading. The system agent unit circuitry 210 includes those components coordinating and operating cores 202(A)-(N). The system agent unit circuitry 210 may include, for example, power control unit (PCU) circuitry and/or display unit circuitry (not shown). The PCU may be or may include logic and components needed for regulating the power state of the cores 202(A)-(N) and/or the special purpose logic 208 (e.g., integrated graphics logic). The display unit circuitry is for driving one or more externally connected displays.

The cores 202(A)-(N) may be homogenous or heterogeneous in terms of architecture instruction set; that is, two or more of the cores 202(A)-(N) may be capable of executing the same instruction set, while other cores may be capable of executing only a subset of that instruction set or a different instruction set.

### Exemplary Core Architectures

### In-order and out-of-order core block diagram

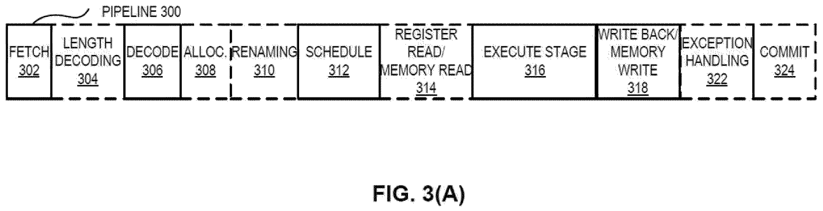

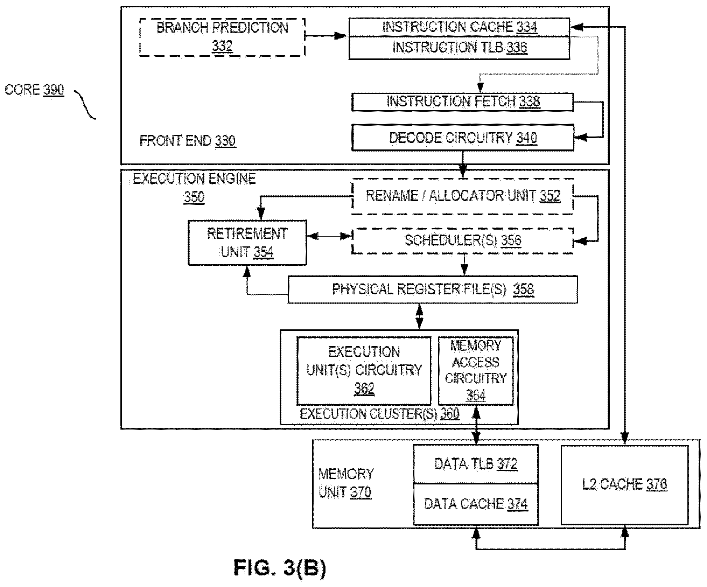

**FIG. 3(A)** is a block diagram illustrating both an exemplary in-order pipeline and an exemplary register renaming, out-of-order issue/execution pipeline according to embodiments of the invention. **FIG. 3(B)** is a block diagram illustrating both an exemplary embodiment of an in-order architecture core and an exemplary register renaming, out-of-order issue/execution architecture core to be included in a processor according to embodiments of the invention. The solid lined boxes in **FIGS. 3(A)****-(B)** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In **FIG. 3(A)****,** a processor pipeline 300 includes a fetch stage 302, an optional length decode stage 304, a decode stage 306, an optional allocation stage 308, an optional renaming stage 310, a scheduling (also known as a dispatch or issue) stage 312, an optional register read/memory read stage 314, an execute stage 316, a write back/memory write stage 318, an optional exception handling stage 322, and an optional commit stage 324. One or more operations can be performed in each of these processor pipeline stages. For example, during the fetch stage 302, one or more instructions are fetched from instruction memory, during the decode stage 306, the one or more fetched instructions may be decoded, addresses (e.g., load store unit (LSU) addresses) using forwarded register ports may be generated, and branch forwarding (e.g., immediate offset or an link register (LR)) may be performed. In one embodiment, the decode stage 306 and the register read/memory read stage 314 may be combined into one pipeline stage. In one embodiment, during the execute stage 316, the decoded instructions may be executed, LSU address/data pipelining to an Advanced Microcontroller Bus (AHB) interface may be performed, multiply and add operations may be performed, arithmetic operations with branch results may be performed, etc.

By way of example, the exemplary register renaming, out-of-order issue/execution core architecture may implement the pipeline 300 as follows: 1) the instruction fetch 338 performs the fetch and length decoding stages 302 and 304; 2) the decode unit circuitry 340 performs the decode stage 306; 3) the rename/allocator unit circuitry 352 performs the allocation stage 308 and renaming stage 310; 4) the scheduler unit(s) circuitry 356 performs the schedule stage 312; 5) the physical register file(s) unit(s) circuitry 358 and the memory unit circuitry 370 perform the register read/memory read stage 314; the execution cluster 360 perform the execute stage 316; 6) the memory unit circuitry 370 and the physical register file(s) unit(s) circuitry 358 perform the write back/memory write stage 318; 7) various units (unit circuitry) may be involved in the exception handling stage 322; and 8) the retirement unit circuitry 354 and the physical register file(s) unit(s) circuitry 358 perform the commit stage 324.

**FIG. 3(B)** shows processor core 390 including front-end unit circuitry 330 coupled to an execution engine unit circuitry 350, and both are coupled to a memory unit circuitry 370. The core 390 may be a reduced instruction set computing (RISC) core, a complex instruction set computing (CISC) core, a very long instruction word (VLIW) core, or a hybrid or alternative core type. As yet another option, the core 390 may be a special-purpose core, such as, for example, a network or communication core, compression engine, coprocessor core, general purpose computing graphics processing unit (GPGPU) core, graphics core, or the like.

The front end unit circuitry 330 may include branch prediction unit circuitry 332 coupled to an instruction cache unit circuitry 334, which is coupled to an instruction translation lookaside buffer (TLB) 336, which is coupled to instruction fetch unit circuitry 338, which is coupled to decode unit circuitry 340. In one embodiment, the instruction cache unit circuitry 334 is included in the memory unit circuitry 370 rather than the front-end unit circuitry 330. The decode unit circuitry 340 (or decoder) may decode instructions, and generate as an output one or more micro-operations, micro-code entry points, microinstructions, other instructions, or other control signals, which are decoded from, or which otherwise reflect, or are derived from, the original instructions. The decode unit circuitry 340 may further include an address generation unit circuitry (AGU, not shown). In one embodiment, the AGU generates an LSU address using forwarded register ports, and may further perform branch forwarding (e.g., immediate offset branch forwarding, LR register branch forwarding, etc.). The decode unit circuitry 340 may be implemented using various different mechanisms. Examples of suitable mechanisms include, but are not limited to, look-up tables, hardware implementations, programmable logic arrays (PLAs), microcode read only memories (ROMs), etc. In one embodiment, the core 390 includes a microcode ROM (not shown) or other medium that stores microcode for certain macroinstructions (e.g., in decode unit circuitry 340 or otherwise within the front end unit circuitry 330). In one embodiment, the decode unit circuitry 340 includes a micro-operation (micro-op) or operation cache (not shown) to hold/cache decoded operations, micro-tags, or micro-operations generated during the decode or other stages of the processor pipeline 300. The decode unit circuitry 340 may be coupled to rename/allocator unit circuitry 352 in the execution engine unit circuitry 350.

The execution engine circuitry 350 includes the rename/allocator unit circuitry 352 coupled to a retirement unit circuitry 354 and a set of one or more scheduler(s) circuitry 356. The scheduler(s) circuitry 356 represents any number of different schedulers, including reservations stations, central instruction window, etc. In some embodiments, the scheduler(s) circuitry 356 can include arithmetic logic unit (ALU) scheduler/scheduling circuitry, ALU queues, arithmetic generation unit (AGU) scheduler/scheduling circuitry, AGU queues, etc. The scheduler(s) circuitry 356 is coupled to the physical register file(s) circuitry 358. Each of the physical register file(s) circuitry 358 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one embodiment, the physical register file(s) unit circuitry 358 includes vector registers unit circuitry, writemask registers unit circuitry, and scalar register unit circuitry. These register units may provide architectural vector registers, vector mask registers, general-purpose registers, etc. The physical register file(s) unit(s) circuitry 358 is overlapped by the retirement unit circuitry 354 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 354 and the physical register file(s) circuitry 358 are coupled to the execution cluster(s) 360. The execution cluster(s) 360 includes a set of one or more execution units circuitry 362 and a set of one or more memory access circuitry 364. The execution units circuitry 362 may perform various arithmetic, logic, floating-point or other types of operations (e.g., shifts, addition, subtraction, multiplication) and on various types of data (e.g., scalar floating-point, packed integer, packed floating-point, vector integer, vector floating-point). While some embodiments may include a number of execution units or execution unit circuitry dedicated to specific functions or sets of functions, other embodiments may include only one execution unit circuitry or multiple execution units/execution unit circuitry that all perform all functions. The scheduler(s) circuitry 356, physical register file(s) unit(s) circuitry 358, and execution cluster(s) 360 are shown as being possibly plural because certain embodiments create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) unit circuitry, and/or execution cluster - and in the case of a separate memory access pipeline, certain embodiments are implemented in which only the execution cluster of this pipeline has the memory access unit(s) circuitry 364). It should also be understood that where separate pipelines are used, one or more of these pipelines may be out-of-order issue/execution and the rest in-order.

In some embodiments, the execution engine unit circuitry 350 may perform load store unit (LSU) address/data pipelining to an Advanced Microcontroller Bus (AHB) interface (not shown), and address phase and writeback, data phase load, store, and branches.

The set of memory access circuitry 364 is coupled to the memory unit circuitry 370, which includes data TLB unit circuitry 372 coupled to a data cache circuitry 374 coupled to a level 2 (L2) cache circuitry 376. In one exemplary embodiment, the memory access units circuitry 364 may include a load unit circuitry, a store address unit circuit, and a store data unit circuitry, each of which is coupled to the data TLB circuitry 372 in the memory unit circuitry 370. The instruction cache circuitry 334 is further coupled to a level 2 (L2) cache unit circuitry 376 in the memory unit circuitry 370. In one embodiment, the instruction cache 334 and the data cache 374 are combined into a single instruction and data cache (not shown) in L2 cache unit circuitry 376, a level 3 (L3) cache unit circuitry (not shown), and/or main memory. The L2 cache unit circuitry 376 is coupled to one or more other levels of cache and eventually to a main memory.

The core 390 may support one or more instructions sets (e.g., the x86 instruction set (with some extensions that have been added with newer versions); the MIPS instruction set; the ARM instruction set (with optional additional extensions such as NEON)), including the instruction(s) described herein. In one embodiment, the core 390 includes logic to support a packed data instruction set extension (e.g., AVX1, AVX2), thereby allowing the operations used by many multimedia applications to be performed using packed data.

### Exemplary Execution Unlt(s) Circuitry

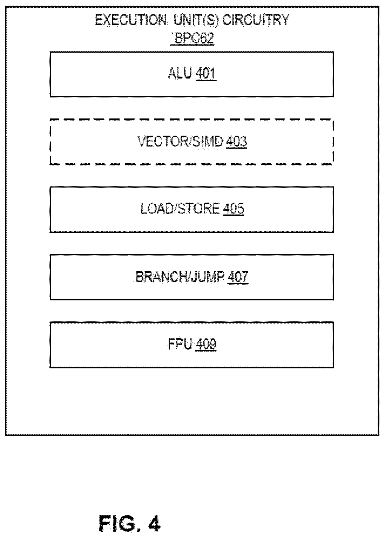

**FIG. 4** illustrates embodiments of execution unit(s) circuitry, such as execution unit(s) circuitry 362 of FIG. 3(B). As illustrated, execution unit(s) circuity 362 may include one or more ALU circuits 401, vector/SIMD unit circuits 403, load/store unit circuits 405, and/or branch/jump unit circuits 407. ALU circuits 401 perform integer arithmetic and/or Boolean operations. Vector/SIMD unit circuits 403 perform vector/SIMD operations on packed data (such as SIMD/vector registers). Load/store unit circuits 405 execute load and store instructions to load data from memory into registers or store from registers to memory. Load/store unit circuits 405 may also generate addresses. Branch/jump unit circuits 407 cause a branch or jump to a memory address depending on the instruction. Floating-point unit (FPU) circuits 409 perform floating-point arithmetic. The width of the execution unit(s) circuitry 362 varies depending upon the embodiment and can range from 16-bit to 1,024-bit. In some embodiments, two or more smaller execution units are logically combined to form a larger execution unit (e.g., two 128-bit execution units are logically combined to form a 256-bit execution unit).

### Exemplary Register Architecture

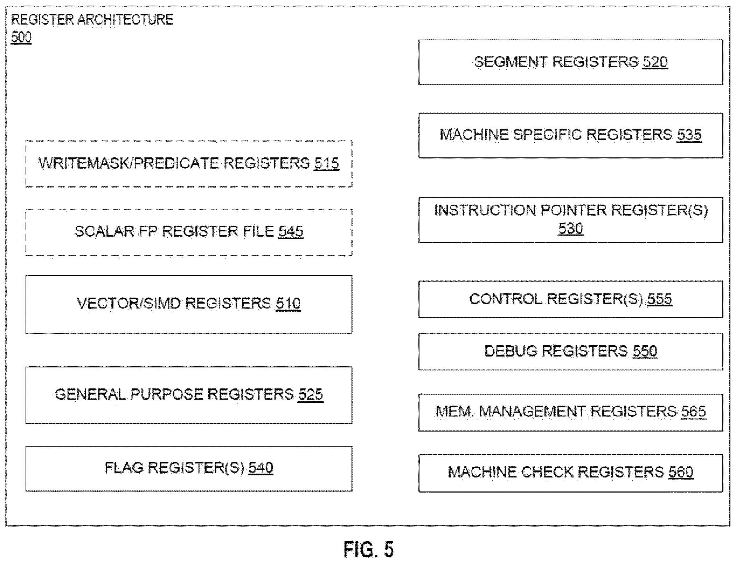

**FIG. 5** is a block diagram of a register architecture 500 according to some embodiments. As illustrated, there are vector/SIMD registers 510 that vary from 128-bit to 1,024 bits width. In some embodiments, the vector/SIMD registers 510 are physically 512-bits and, depending upon the mapping, only some of the lower bits are used. For example, in some embodiments, the vector/SIMD registers 510 are ZMM registers which are 512 bits: the lower 256 bits are used for YMM registers and the lower 128 bits are used for XMM registers. As such, there is an overlay of registers. In some embodiments, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the embodiment.

In some embodiments, the register architecture 500 includes writemask/predicate registers 515. For example, in some embodiments, there are 8 writemask/predicate registers (sometimes called k0 through k7) that are each 16-bit, 32-bit, 64-bit, or 128-bit in size. Writemask/predicate registers 515 may allow for merging (e.g., allowing any set of elements in the destination to be protected from updates during the execution of any operation) and/or zeroing (e.g., zeroing vector masks allow any set of elements in the destination to be zeroed during the execution of any operation). In some embodiments, each data element position in a given writemask/predicate register 515 corresponds to a data element position of the destination. In other embodiments, the writemask/predicate registers 515 are scalable and consists of a set number of enable bits for a given vector element (e.g., 8 enable bits per 64-bit vector element).

The register architecture 500 includes a plurality of general-purpose registers 525. These registers may be 16-bit, 32-bit, 64-bit, etc. and can be used for scalar operations. In some embodiments, these registers are referenced by the names RAX, RBX, RCX, RDX, RBP, RSI, RDI, RSP, and R8 through R15.

In some embodiments, the register architecture 500 includes scalar floating-point register 545 which is used for scalar floating-point operations on 32/64/80-bit floating-point data using the x87 instruction set extension or as MMX registers to perform operations on 64-bit packed integer data, as well as to hold operands for some operations performed between the MMX and XMM registers.

One or more flag registers 540 (e.g., EFLAGS, RFLAGS, etc.) store status and control information for arithmetic, compare, and system operations. For example, the one or more flag registers 540 may store condition code information such as carry, parity, auxiliary carry, zero, sign, and overflow. In some embodiments, the one or more flag registers 540 are called program status and control registers.

Segment registers 520 contain segment points for use in accessing memory. In some embodiments, these registers are referenced by the names CS, DS, SS, ES, FS, and GS.

Machine specific registers (MSRs) 535 control and report on processor performance. Most MSRs 535 handle system-related functions and are not accessible to an application program. Machine check registers 560 consist of control, status, and error reporting MSRs that are used to detect and report on hardware errors.

One or more instruction pointer register(s) 530 store an instruction pointer value. Control register(s) 555 (e.g., CR0-CR4) determine the operating mode of a processor (e.g., processor 170, 180, 138, 115, and/or 200) and the characteristics of a currently executing task. Debug registers 550 control and allow for the monitoring of a processor or core's debugging operations.

Memory management registers 565 specify the locations of data structures used in protected mode memory management. These registers may include a GDTR, IDRT, task register, and a LDTR register.

Alternative embodiments of the invention may use wider or narrower registers. Additionally, alternative embodiments of the invention may use more, less, or different register files and registers.

### Instruction Sets

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands.

### Exemplary Instruction Formats

Embodiments of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

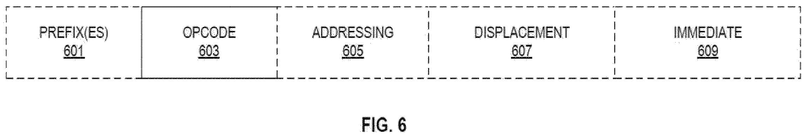

**FIG. 6** illustrates embodiments of an instruction format. As illustrated, an instruction may include multiple components including, but not limited to, one or more fields for: one or more prefixes 601, an opcode 603, addressing information 605 (e.g., register identifiers, memory addressing information, etc.), a displacement value 607, and/or an immediate 609. Note that some instructions utilize some or all of the fields of the format whereas others may only use the field for the opcode 603. In some embodiments, the order illustrated is the order in which these fields are to be encoded, however, it should be appreciated that in other embodiments these fields may be encoded in a different order, combined, etc.

The prefix(es) field(s) 601, when used, modifies an instruction. In some embodiments, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 603 is used to at least partially define the operation to be performed upon a decoding of the instruction. In some embodiments, a primary opcode encoded in the opcode field 603 is 1, 2, or 3 bytes in length. In other embodiments, a primary opcode can be a different length. An additional 3-bit opcode field is sometimes encoded in another field.

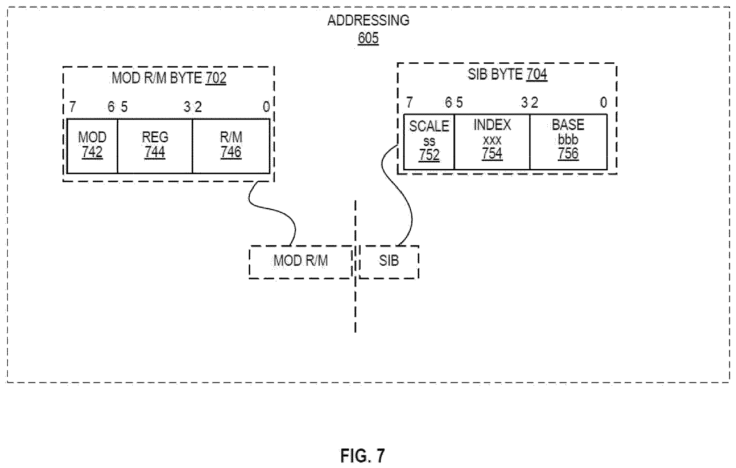

The addressing field 605 is used to address one or more operands of the instruction, such as a location in memory or one or more registers. **FIG. 7** illustrates embodiments of the addressing field 605. In this illustration, an optional ModR/M byte 702 and an optional Scale, Index, Base (SIB) byte 704 are shown. The ModR/M byte 702 and the SIB byte 704 are used to encode up to two operands of an instruction, each of which is a direct register or effective memory address. Note that each of these fields are optional in that not all instructions include one or more of these fields. The MOD R/M byte 702 includes a MOD field 742, a register field 744, and R/M field 746.

The content of the MOD field 742 distinguishes between memory access and non-memory access modes. In some embodiments, when the MOD field 742 has a value of b11, a register-direct addressing mode is utilized, and otherwise register-indirect addressing is used.

The register field 744 may encode either the destination register operand or a source register operand, or may encode an opcode extension and not be used to encode any instruction operand. The content of register index field 744, directly or through address generation, specifies the locations of a source or destination operand (either in a register or in memory). In some embodiments, the register field 744 is supplemented with an additional bit from a prefix (e.g., prefix 601) to allow for greater addressing.

The R/M field 746 may be used to encode an instruction operand that references a memory address, or may be used to encode either the destination register operand or a source register operand. Note the R/M field 746 may be combined with the MOD field 742 to dictate an addressing mode in some embodiments.

The SIB byte 704 includes a scale field 752, an index field 754, and a base field 756 to be used in the generation of an address. The scale field 752 indicates scaling factor. The index field 754 specifies an index register to use. In some embodiments, the index field 754 is supplemented with an additional bit from a prefix (e.g., prefix 601) to allow for greater addressing. The base field 756 specifies a base register to use. In some embodiments, the base field 756 is supplemented with an additional bit from a prefix (e.g., prefix 601) to allow for greater addressing. In practice, the content of the scale field 752 allows for the scaling of the content of the index field 754 for memory address generation (e.g., for address generation that uses 2^{scale ∗} index + base).

Some addressing forms utilize a displacement value to generate a memory address. For example, a memory address may be generated according to 2^{scale ∗} index + base + displacement, index*scale+displacement, r/m + displacement, instruction pointer (RIP/EIP) + displacement, register + displacement, etc. The displacement may be a 1-byte, 2-byte, 4-byte, etc. value. In some embodiments, a displacement field 607 provides this value. Additionally, in some embodiments, a displacement factor usage is encoded in the MOD field of the addressing field 605 that indicates a compressed displacement scheme for which a displacement value is calculated by multiplying disp8 in conjunction with a scaling factor N that is determined based on the vector length, the value of a b bit, and the input element size of the instruction. The displacement value is stored in the displacement field 607.

In some embodiments, an immediate field 609 specifies an immediate for the instruction. An immediate may be encoded as a 1-byte value, a 2-byte value, a 4-byte value, etc.

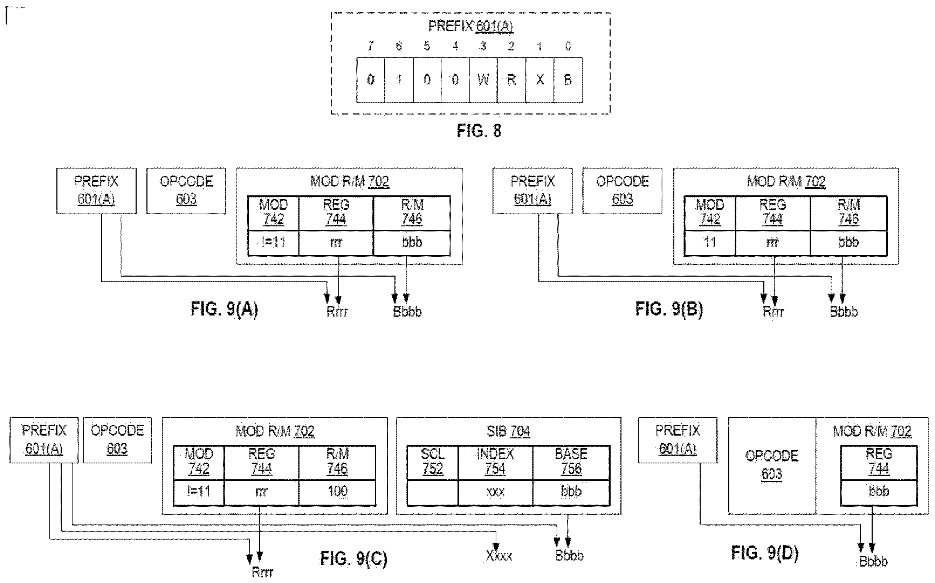

**FIG. 8** illustrates embodiments of a first prefix 601(A). In some embodiments, the first prefix 601(A) is an embodiment of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 601(A) may specify up to three registers using 3-bit fields depending on the format: 1) using the reg field 744 and the R/M field 746 of the Mod R/M byte 702; 2) using the Mod R/M byte 702 with the SIB byte 704 including using the reg field 744 and the base field 756 and index field 754; or 3) using the register field of an opcode.

In the first prefix 601(A), bit positions 7:4 are set as 0100. Bit position 3 (W) can be used to determine the operand size, but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 744 and MOD R/M R/M field 746 alone can each only address 8 registers.

In the first prefix 601(A), bit position 2 (R) may an extension of the MOD R/M reg field 744 and may be used to modify the ModR/M reg field 744 when that field encodes a general purpose register, a 64-bit packed data register (e.g., a SSE register), or a control or debug register. R is ignored when Mod R/M byte 702 specifies other registers or defines an extended opcode.

Bit position 1 (X) X bit may modify the SIB byte index field 754.

Bit position B (B) B may modify the base in the Mod R/M R/M field 746 or the SIB byte base field 756; or it may modify the opcode register field used for accessing general purpose registers (e.g., general purpose registers 525).

**FIGS. 9(A)****-(D)** illustrate embodiments of how the R, X, and B fields of the first prefix 601(A) are used. **FIG. 9(A)** illustrates R and B from the first prefix 601(A) being used to extend the reg field 744 and R/M field 746 of the MOD R/M byte 702 when the SIB byte 7 04 is not used for memory addressing. **FIG. 9(B)** illustrates R and B from the first prefix 601(A) being used to extend the reg field 744 and R/M field 746 of the MOD R/M byte 702 when the SIB byte 7 04 is not used (register-register addressing). **FIG. 9(C)** illustrates R, X, and B from the first prefix 601(A) being used to extend the reg field 744 of the MOD R/M byte 702 and the index field 754 and base field 756 when the SIB byte 7 04 being used for memory addressing. **FIG. 9(D)** illustrates B from the first prefix 601(A) being used to extend the reg field 744 of the MOD R/M byte 702 when a register is encoded in the opcode 603.

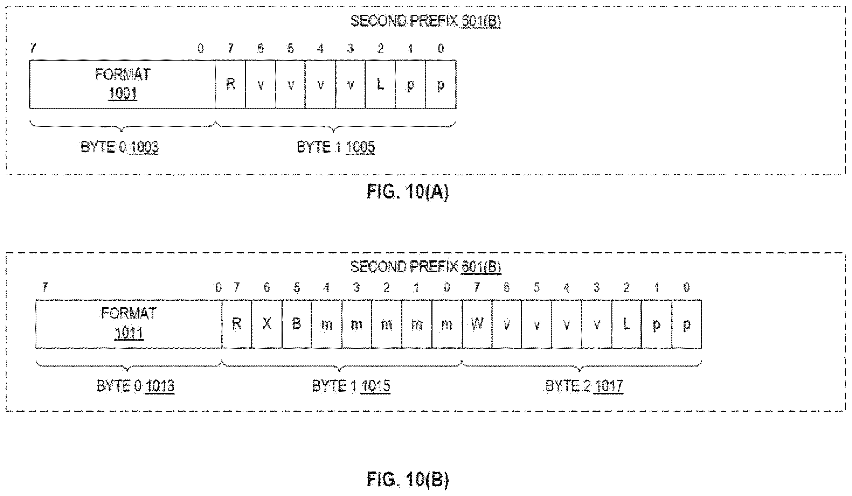

**FIGS. 10(A)****-(B)** illustrate embodiments of a second prefix 601(B). In some embodiments, the second prefix 601(B) is an embodiment of a VEX prefix. The second prefix 601(B) encoding allows instructions to have more than two operands, and allows SIMD vector registers (e.g., vector/SIMD registers 510) to be longer than 64-bits (e.g., 128-bit and 256-bit). The use of the second prefix 601(B) provides for three-operand (or more) syntax. For example, previous two-operand instructions performed operations such as A = A + B, which overwrites a source operand. The use of the second prefix 601(B) enables operands to perform nondestructive operations such as A = B + C.

In some embodiments, the second prefix 601(B) comes in two forms - a two-byte form and a three-byte form. The two-byte second prefix 601(B) is used mainly for 128-bit, scalar, and some 256-bit instructions; while the three-byte second prefix 601(B) provides a compact replacement of the first prefix 601(A) and 3-byte opcode instructions.

**FIG. 10(A)** illustrates embodiments of a two-byte form of the second prefix 601(B). In one example, a format field 1001 (byte 0 1003) contains the value C5H. In one example, byte 1 1005 includes a "R" value in bit[7]. This value is the complement of the same value of the first prefix 601(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 746 to encode the instruction operand that references a memory address or encode either the destination register operand or a source register operand.

Instructions that use this prefix may use the Mod R/M reg field 744 to encode either the destination register operand or a source register operand, be treated as an opcode extension and not used to encode any instruction operand.

For instruction syntax that support four operands, vvvv, the Mod R/M R/M field 746 and the Mod R/M reg field 744 encode three of the four operands. Bits[7:4] of the immediate 609 are then used to encode the third source register operand.

**FIG. 10(B)** illustrates embodiments of a three-byte form of the second prefix 601(B). in one example, a format field 1011 (byte 0 1013) contains the value C4H. Byte 1 1015 includes in bits[7:5] "R," "X," and "B" which are the complements of the same values of the first prefix 601(A). Bits[4:0] of byte 1 1015 (shown as mmmmm) include content to encode, as need, one or more implied leading opcode bytes. For example, 00001 implies a 0FH leading opcode, 00010 implies a 0F38H leading opcode, 00011 implies a leading 0F3AH opcode, etc.

Bit[7] of byte 2 1017 is used similar to W of the first prefix 601(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 746 to encode the instruction operand that references a memory address or encode either the destination register operand or a source register operand.

Instructions that use this prefix may use the Mod R/M reg field 744 to encode either the destination register operand or a source register operand, be treated as an opcode extension and not used to encode any instruction operand.

For instruction syntax that support four operands, vvvv, the Mod R/M R/M field 746, and the Mod R/M reg field 744 encode three of the four operands. Bits[7:4] of the immediate 609 are then used to encode the third source register operand.

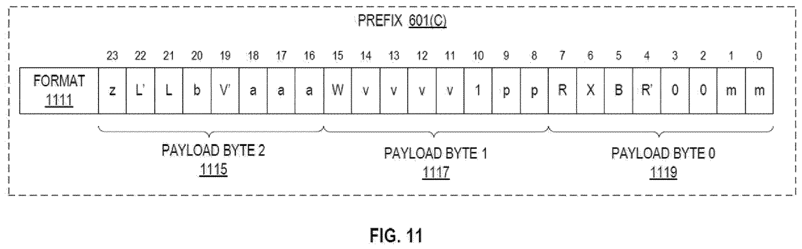

**FIG. 11** illustrates embodiments of a third prefix 601(C). In some embodiments, the first prefix 601(A) is an embodiment of an EVEX prefix. The third prefix 601(C) is a four-byte prefix.

The third prefix 601(C) can encode 32 vector registers (e.g., 128-bit, 256-bit, and 512-bit registers) in 64-bit mode. In some embodiments, instructions that utilize a writemask/opmask (see discussion of registers in a previous figure, such as **FIG. 5**) or predication utilize this prefix. Opmask register allow for conditional processing or selection control. Opmask instructions, whose source/destination operands are opmask registers and treat the content of an opmask register as a single value, are encoded using the second prefix 601(B).

The third prefix 601(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 601(C) is a format field 1111 that has a value, in one example, of 62H. Subsequent bytes are referred to as payload bytes 1115-1119 and collectively form a 24-bit value of P[23:0] providing specific capability in the form of one or more fields (detailed herein).

In some embodiments, P[1:0] of payload byte 1119 are identical to the low two mmmmm bits. P[3:2] are reserved in some embodiments. Bit P[4] (R') allows access to the high 16 vector register set when combined with P[7] and the ModR/M reg field 744. P[6] can also provide access to a high 16 vector register when SIB-type addressing is not needed. P[7:5] consist of an R, X, and B which are operand specifier modifier bits for vector register, general purpose register, memory addressing and allow access to the next set of 8 registers beyond the low 8 registers when combined with the ModR/M register field 744 and ModR/M R/M field 746. P[9:8] provide opcode extensionality equivalent to some legacy prefixes (e.g., 00 = no prefix, 01 = 66H, 10 = F3H, and 11 = F2H). P[10] in some embodiments is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 601(A) and second prefix 611(B) and may serve as an opcode extension bit or operand size promotion.

P[18:16] specify the index of a register in the opmask (writemask) registers (e.g., writemask/predicate registers 515). In one embodiment of the invention, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While embodiments of the invention are described in which the opmask field's content selects one of a number of opmask registers that contains the opmask to be used (and thus the opmask field's content indirectly identifies that masking to be performed), alternative embodiments instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Exemplary embodiments of encoding of registers in instructions using the third prefix 601(C) are detailed in the following tables.

**Table 1: 32-Register Support in 64-bit Mode**

| | **4** | **3** | **[2:0]** | **REG. TYPE** | **COMMON USAGES** |
|---|---|---|---|---|---|
| **REG** | R' | R | ModR/M reg | GPR, Vector | Destination or Source |
| **VVW** | V' | vvvv | | GPR, Vector | 2nd Source or Destination |
| **RM** | X | B | ModR/M R/M | GPR, Vector | 1st Source or Destination |
| **BASE** | 0 | B | ModR/M R/M | GPR | Memory addressing |
| **INDEX** | 0 | X | SIB.index | GPR | Memory addressing |
| **VIDX** | V' | X | SIB.index | Vector | VSIB memory addressing |

**Table 2: Encoding Register Specifiers in 32-bit Mode**

| | **[2:0]** | **REG. TYPE** | **COMMON USAGES** |
|---|---|---|---|
| **REG** | ModR/M reg | GPR, Vector | Destination or Source |
| **VVW** | vvvv | GPR, Vector | 2^{nd} Source or Destination |
| **RM** | ModR/M R/M | GPR, Vector | 1^{st} Source or Destination |
| **BASE** | ModR/M R/M | GPR | Memory addressing |
| **INDEX** | SIB.index | GPR | Memory addressing |
| **VIDX** | SIB.index | Vector | VSIB memory addressing |

**Table 3: Opmask Register Specifier Encoding**

| | **[2:0]** | **REG. TYPE** | **COMMON USAGES** |
|---|---|---|---|
| **REG** | ModR/M Reg | k0-k7 | Source |
| **VVVV** | vvvv | k0-k7 | 2^{nd} Source |
| **RM** | ModR/M R/M | k0-7 | 1^{st} Source |
| **{k1]** | aaa | k0¹-k7 | Opmask |

Program code may be applied to input instructions to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), or a microprocessor.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

### Emulation (including binary translation, code morphing, etc.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

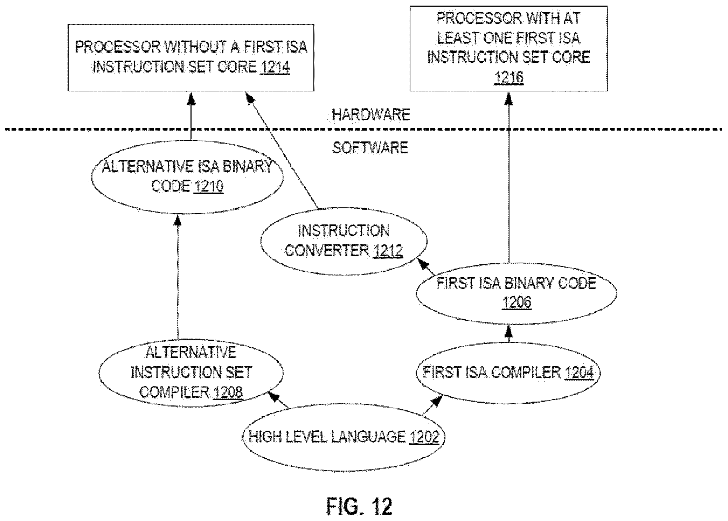

**FIG. 12** illustrates a block diagram contrasting the use of a software instruction converter to convert binary instructions in a source instruction set to binary instructions in a target instruction set according to certain implementations. In the illustrated embodiment, the instruction converter is a software instruction converter, although alternatively the instruction converter may be implemented in software, firmware, hardware, or various combinations thereof. **FIG. 12** shows a program in a high level language 1202 may be compiled using a first ISA compiler 1204 to generate first ISA binary code 1206 that may be natively executed by a processor with at least one first instruction set core 1216. The processor with at least one first ISA instruction set core 1216 represents any processor that can perform substantially the same functions as an Intel^{®} processor with at least one first ISA instruction set core by compatibly executing or otherwise processing (1) a substantial portion of the instruction set of the first ISA instruction set core or (2) object code versions of applications or other software targeted to run on an Intel processor with at least one first ISA instruction set core, in order to achieve substantially the same result as a processor with at least one first ISA instruction set core. The first ISA compiler 1204 represents a compiler that is operable to generate first ISA binary code 1206 (e.g., object code) that can, with or without additional linkage processing, be executed on the processor with at least one first ISA instruction set core 1216.

Similarly, **FIG. 12** shows the program in the high level language 1202 may be compiled using an alternative instruction set compiler 1208 to generate alternative instruction set binary code 1210 that may be natively executed by a processor without a first ISA instruction set core 1214. The instruction converter 1212 is used to convert the first ISA binary code 1206 into code that may be natively executed by the processor without a first ISA instruction set core 1214. This converted code is not likely to be the same as the alternative instruction set binary code 1210 because an instruction converter capable of this is difficult to make; however, the converted code will accomplish the general operation and be made up of instructions from the alternative instruction set. Thus, the instruction converter 1212 represents software, firmware, hardware, or a combination thereof that, through emulation, simulation or any other process, allows a processor or other electronic device that does not have a first ISA instruction set processor or core to execute the first ISA binary code 1206.

### APPARATUS AND METHOD FOR PROBABILISTIC CACHE REPLACEMENT FOR ACCELERATING ADDRESS TRANSLATION

With modern paging-based virtual memory systems, any program references memory with a virtual address, which requires translation to a physical address for the system memory. An address translation operation finds the mapping of the virtual page number (VPN) to its corresponding physical page number (PPN). Most modern processors maintain multiple levels of address translation caches called Translation-Lookaside-Buffers (TLBs), which are first looked up to fetch the VPN-PPN translation pair.

A TLB miss incurs high latency since it invokes a Page-Miss-Handler (PMH) to fetch the requisite translation by hierarchically traversing the OS-managed multi-level Page Table (PT) in memory. The total latency involves the cache/memory access latency for the required levels. A TLB miss can result in multiple stalled loads/stores in the memory pipeline since a single VPN-PPN pair can serve multiple memory accesses to the same page frame. Therefore, TLB miss latency reduction is critical for system performance improvement. Most modern processor leverage page-table caches (PXE caches) for the multiple levels of page-table. However, the lower levels of the page-table have footprints that cannot be covered effectively by these small PXE caches, resulting in longer latency lookups in the L1/L2/L3 caches and main memory.

Since each VPN-PPN pair covers at least 64 data cachelines, it generally observes enough reuse within the multi-level TLB structure, after being filled from cache/memory. Therefore, the page-table entry (PTE) cachelines that hold these translations observe considerably large reuse distance in the L1/L2/L3 caches. Hence, when a PTE cacheline is filled in the cache on-demand, it is evicted without much reuse, resulting in thrashing of PTE cachelines by non-PTE cachelines which have smaller reuse distances and are accessed more frequently.

Embodiments of the invention implement a class-of-service using probabilistic cache replacement at the L2 cache to retain the PTE cachelines longer and achieve higher cache reuse. The longer retention of PTE cachelines effectively reduces the TLB miss latency and improves performance. In one embodiment, the PTE cachelines in L2 cache are protected by reducing the eviction probability of PTE cachelines by non-PTE cachelines, essentially creating a thrashing-safe zone inside the L2 cache for PTE cachelines. Significant performance gains are thereby realized with minimal hardware overhead, which is particularly beneficial for key server workload categories such as large-code-footprint workloads (LCFP), Cloud, ISPEC17_gcc, and enterprise.

Existing implementations attempt to improve the L2 cache hit rate by increasing the L2 cache size or using static partitioning techniques such as cache QoS. The primary idea with increasing the L2 cache size is to cache a higher footprint of data, aiming for a higher hit rate. The current trend of increasing the L2 cache size points to a willingness to spend silicon budget on the L2 cache to improve performance. However, the L2 cache size will not comprehensively solve the problem of PTE cacheline thrashing by non-PTE cachelines. The most commonly used 2-bit LRU scheme implemented for the L2 cache quickly ages the PTE cachelines due to low access frequency. Therefore, non-PTE cacheline fills mostly evict PTE cachelines (if present) due to their lowest-reuse counter status.

Static partitioning assigns a static partition in the L2 cache for PTE cachelines which can be looked-up/filled/evicted by only PTE cachelines. For example, 2 out of 16 ways of the L2 cache can be allocated for PTE cachelines. This prevents more frequent non-PTE cachelines from thrashing and thereby evicting PTE cachelines. Hence, static partitioning should help increase the PTE hit rate. Static partitioning has been implemented at the last-level cache (LLC), leveraging bitmask-based technologies like Cache Allocation Technology (CAT) which use OS support to group applications into different classes and statically allocate cache ways to these different OS-determined groups.

However, static partitioning does not adapt dynamically to the PTE footprint of a workload. Therefore, there is a high probability of either over-provisioning or under-provisioning of cache resources for PTE footprint. In the case of over-provisioning, it basically reduces the cache resources available to non-PTE cachelines, significantly reducing the hit-rate of the non-PTE category. In the case of under-provisioning, the PTE thrashing problem will persist, but in this case, the PTE will be thrashing other PTE cachelines. This case might have been avoided if, say, 3 ways were allotted for PTE rather than 2 ways.

State-of-the-art static partitioning techniques like CAT are primarily architectural solutions which require interactions with and hints from privileged software like the OS to achieve the targeted QoS. Additionally, the QoS is suitable for application-vs-application resource conflicts, and not geared towards fine-grained access type based class of service.

In contrast, embodiments of the invention provide a microarchitectural implementation providing quality of service (QoS) between specific access categories without OS intervention. These embodiments include a lightweight cache replacement policy geared towards prioritization of retaining PTE cachelines. This achieves prevention of thrashing of PTE cachelines by non-PTE cachelines, thereby achieving overall higher PTE hit rate and reducing address translation bottlenecks. Making PTE cachelines sticky in the L2 cache yields a performance benefit since it increases the PTE line hit rate without affecting the hit rate for non-PTE cachelines significantly. Selective PTE prioritization may be achieved by ensuring a very low probability of PTE eviction during non-PTE fills, depending on the number of PTE cachelines in a set. Additionally, some embodiments include a rollback mechanism to allow partial flushing of dead-on-arrival PTE cachelines. These techniques are implemented with minimal hardware storage overhead.

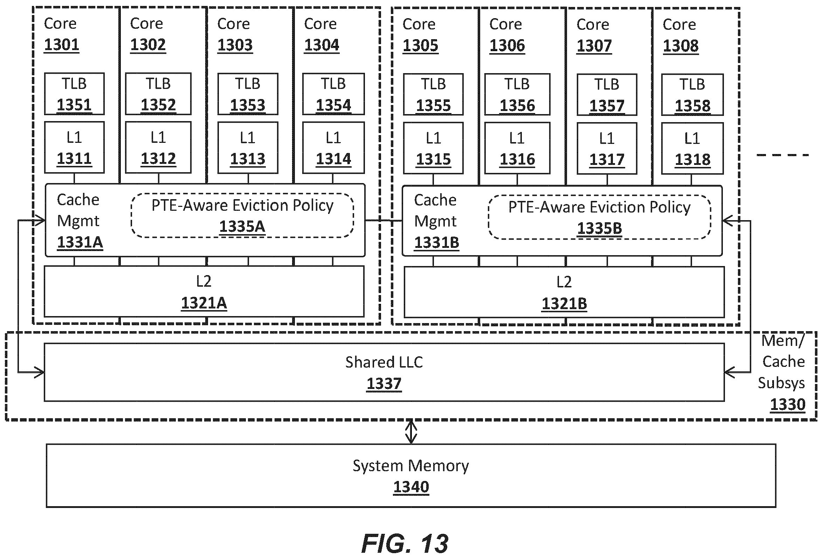

**Figure 13** illustrates an example processor architecture for implementing embodiments of the invention which includes a plurality of cores 1301-1308, each with its own L1 cache 1351-1358 and L1 TLB 1351-1358, respectively. Cores 1301-1304 share a first L2 cache 1321 and cores 1305-1306 share a second L2 cache 1322. While this particular arrangement is shown for the purpose of illustration, the underlying principles of the invention are not so limited. In other implementations, for example, each L2 cache may be shared with a larger number of cores (e.g., 8 cores, all cores, etc) or with fewer than four cores.

Cache management hardware logic 1331A-B manages access to the L2 cache 1321A-B and the memory/cache subsystem 1330 which includes a shared LLC (or "L3 cache"), shared by all cores of the processor, and provides access to system memory 1340 (e.g., which may be a DDR DRAM, HBM memory, etc). The cache management hardware logic 1331A-B implements a PTE-aware eviction policy which maintains PTE cachelines in the L2 cache for longer periods of time using the techniques described herein.

Note that various architectural details are not illustrated in **Figure 13** to avoid obscuring the underlying principles of the invention. For example, although not shown, the processor architecture may include multiple levels of TLBs, and various types of control and data interconnections between the L1 cache, L2 cache, and shared LLC 1337.

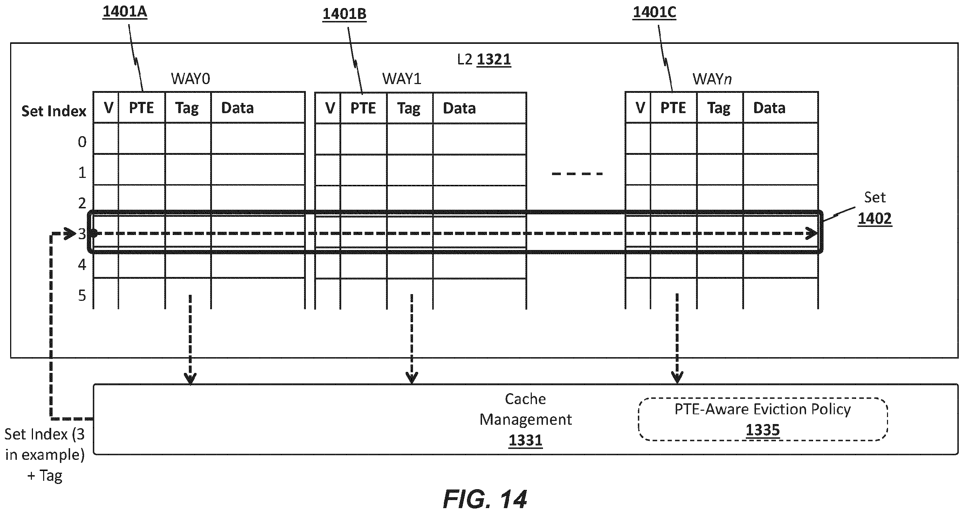

**Figure 14** illustrates an example of an N-way set associative L2 cache which is organized into a plurality of sets and ways. An index value is provided to identify a particular cache set, such as cache set 1402 which is highlighted, and a tag value is used to determine if the associated cacheline is present in the cache set within any of the N ways. The index value and tag value are derived from a corresponding memory address. In one embodiment of the invention, a new PTE bit 1401A-C (sometimes referred to as a PTEMarker) is included in each entry of the L2 cache to indicate whether the corresponding entry is a PTE cacheline. Thus, when the cache management logic 1331 implements the PTE-aware eviction policy 1335, as described in detail below, it determines the number of PTE cachelines in a set or way based on the value of the PTE bit 1401 (e.g., if set to 1, the cacheline is a PTE cacheline).

The addition of the PTE bit 1401A-C requires a minimal amount of additional storage overhead. For example, assuming a 4MB L2 cache with 16 ways and 4096 sets, 8KB of storage is consumed (4096 sets * 16 ways * 1bit), which equates to a ~0.2% storage overhead.

In one embodiment, on a PTE cacheline fill, the number of PTE cachelines (say *X*) in that set index is counted. For example, this would be determined by determining the number of cachelines in the set index with the PTE bit set to 1. As specified in the PTE-aware eviction policy 1335, if *X* is less than or equal to a threshold number of ways (*N_thresh,* say 2), the cache management hardware logic 1331 will only replace a non-PTE line with the incoming PTE cacheline, thereby reducing the chances of PTE-PTE thrashing. However, if the number of PTE cachelines, *X > N_thresh,* it can replace any cacheline in the cache set (e.g., cache set 1402 at index 3 in the example).

On a non-PTE cacheline fill, if *X* (the number of PTE cachelines in the set) *<= N_thresh,* then the cache management hardware logic 1331 will only evict non-PTE cachelines. Otherwise, if *X > N_thresh,* then it can evict PTE cachelines probabilistically. In one embodiment, different probabilities of replacement (*P_rep*) are assigned based on *X.* By way of example, and not limitation, in one particular embodiment, *P_rep* is 0% for *X <=2,* 20% for 2 *< X <= 4,* and 100% for *X > 4*. Different sets of probabilities may be assigned for different ranges of *X* while still complying with the underlying principles of the invention.

The goal of reducing the eviction probability of PTE cachelines in response to non-PTE cachelines is to hold the PTE cachelines in the L2 cache long enough to support the large reuse distance of these cachelines. In one embodiment, the cache management hardware logic 1331 operating in accordance with the PTE-aware eviction policy 1335 dynamically sets the eviction probability of PTE cachelines based on the number of PTE cachelines (*X*) currently in that set. With this implementation, a useful subset of the PTE footprint (which is generally small) is stored in the L2 cache 1321, without significantly impacting the hit rate for non-PTE cachelines (e.g., without nullifying the performance gains from the increased PTE cacheline hit rate by reducing the performance with respect to non-PTE cachelines).

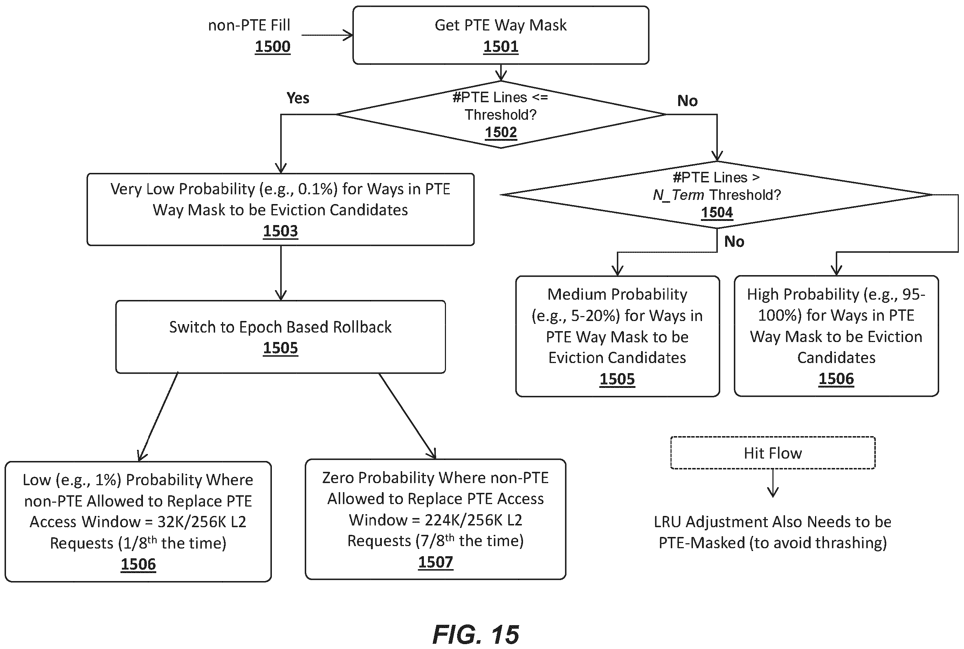

**Figure 15** illustrates one specific implementation. During an L2 cache fill to a particular set at 1500, a PTE way mask is determined at 1501 based on the current PTE cachelines in the set. In one embodiment, the PTE way mask includes a bit associated with each way, which is set to 0 for ways with PTE cachelines and 1 for ways with non-PTE cachelines. If *X <= N_thresh,* determined at 1502, the probability of a PTE eviction is very low (e.g., close to 0%) at 1503, regardless of whether the filling candidate is a PTE or non-PTE cacheline. If *X > N_thresh,* then for the non-PTE fill 1500, if a terminal threshold of PTE ways has not been exceeded, determined at 1504, PTE cachelines can be replaced at 1505 with a medium probability of 5-20%, depending on the value of *X.* In contrast, for PTE fills, if *X* > *N_thresh,* incoming PTE cachelines can replace a PTE cacheline with very high probability (e.g., 100%).

This embodiment sets the terminal threshold of PTE ways (*N_term*) beyond which PTE cacheline replacement is set to a high probability at 1506 (e.g., 95-100%). This is done to prevent PTE cachelines filling up a large fraction of the L2 cache, dropping the non-PTE hit rate significantly, and degrading overall system performance.

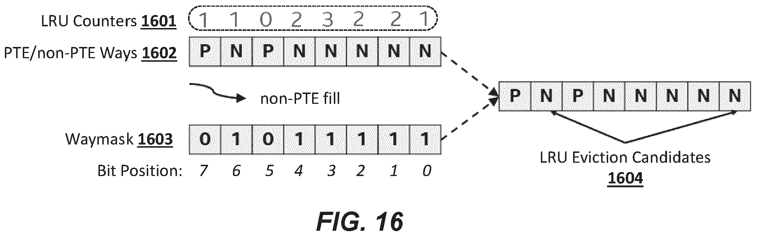

**Figure 16** illustrates an example way mask 1603 generated based on the ways of the current set which store PTE cachelines and non-PTE cachelines 1602. In one embodiment, the way mask 1602 is used to perform selective PTE prioritization in hardware. In particular, the way mask bit values are 0 for ways storing PTE cachelines, effectively removing these ways as replacement candidates during Least Recently Used (LRU)-based cache replacement operations. Before the invocation of the LRU replacement during a L2 cache fill operation, the PTE Marker bits 1401A-C are read. Depending on PTE eviction decision described above, if PTE ways need to be protected, a PTE way mask is generated masking out the ways holding the PTE cachelines in that set. All adjustments to the LRU counters 1601 and eviction decisions are evaluated using only the ways enabled by the way mask 1603 (i.e., having the corresponding way mask bit set to 1). Thus, even though one PTE way has an LRU count of 0 in **Figure 16** (i.e., the way associated with bit 5 of the way mask 1603), it is masked out and cannot be evicted. This is indicated in the resulting set of LRU eviction candidates 1604. In one embodiment, a PTE way mask of all 1s is used when PTE cachelines can be evicted during that cache fill (e.g., in accordance with the method in **Figure 15****).**

One embodiment of the invention includes a rollback mechanism to further reduce bloated PTE footprints which do not significantly improve the PTE hit rate. With rollback enabled, the 0% probability of PTE replacement for *X <= N_thresh* is changed to low probability (e.g. 1-5%) for a rollback window, represented at 1508 in **Figure 15****.** This allows eviction of those PTE cachelines which have not seen any PTE hit rate within a pre-defined window even after being held back through the embodiments of the invention. For example, for an epoch of 256K consecutive L2 accesses, one embodiment uses 32K L2 accesses as one rollback window (at 1506) for which the "low" probability of PTE eviction is enabled even in the *X <= N_thresh* scenario. The PTE cachelines which have not seen any hits within this 256K region will have an opportunity of being evicted out of the L2 cache. Another rollback window of 224K L2 accesses at 1507, reducing the probability to zero.

Embodiments of the invention may use different techniques to achieve the same objective of prioritizing PTE cachelines in the L2 cache, with similar hardware overheads. In this implementation, the LRU counters 1601 for the L2 cache are extended by 1 bit. The counters, which are typically 2 bits are increased to 3 bits in this embodiment, with states 0-7. States 6-7 of the LRU counters 1601 is reserved for PTE cachelines. When a PTE line is filled, it is assigned state 6, which on a hit can be moved to 7. However, for LRU adjustments during an L2 hit on a non-PTE way, any way having LRU counter >= 6 is not adjusted. Therefore, the PTE cachelines will always be associated with an LRU counter value >=6, meaning that they will never be evicted since they will never have the minimum LRU counter value in a set. In this embodiment, non-PTE LRU assignment and adjustment operates in accordance with the baseline LRU policy.

Similar to the previous implementations, this model also supports a rollback mechanism, wherein ways with LRU counters >=6 are allowed to be demoted on an LRU adjustment operation within a smaller window. A global counter tracks the number of LRU partial and full adjustments in the L2 cache. After a predefined threshold, ways with an LRU counter >= 6 are forced to be demoted at the next fill. This allows a pathway for dead-on-arrival/small reuse PTE cachelines to be purged from the L2 cache.

Embodiments have been evaluated on a wide array of workloads encompassing multiple categories, which demonstrate performance gain of up to 20%.

Embodiments of the invention may include various steps, which have been described above. The steps may be embodied in machine-executable instructions which may be used to cause a general-purpose or special-purpose processor to perform the steps. Alternatively, these steps may be performed by specific hardware components that contain hardwired logic for performing the steps, or by any combination of programmed computer components and custom hardware components.

### EXAMPLES

The following are example implementations of different embodiments of the invention.

Example 1. A processor, comprising: a plurality of cores, each core to execute instructions and process data; a cache to be shared by a subset of the plurality of cores, the cache comprising an N-way set associative cache for storing page table entry (PTE) cachelines and non-PTE cachelines; and a cache manager to implement a PTE-aware eviction policy for evicting cachelines from the cache, the PTE-aware eviction policy to reduce a rate at which the PTE cachelines are evicted to service non-PTE cacheline fills.

Example 2. The processor of example 1 wherein if a number of PTE cachelines in a set is less than a first threshold, the cache manager is to evict PTE cachelines from the set at a first rate or with a first probability and wherein if the number of PTE cachelines in a set is greater than the first threshold, the cache manager is to evict PTE cachelines from the set at a second rate greater than the first rate or with a second probability greater than the first probability.

Example 3. The processor of example 2 wherein if a number of PTE cachelines in the set is greater than a third threshold, the cache manager is to evict PTE cachelines from the set at a third rate greater than the second rate or with a third probability greater than the second probability.

Example 4. The processor of example 3 wherein the first probability is in a range of 0% to 1%, the second probability is in a range of 5% to 20%, and the third probability is in a range of 95% to 100%.

Example 5. The processor of example 1 wherein each cacheline is to include a PTE bit to differentiate between the PTE cachelines and the non-PTE cachelines, the cache manager to determine the number of PTE cachelines in the set based on a number of PTE bits set to 1 in the set.

Example 6. The processor of example 5 wherein the cache manager is to generate a way mask with a bit value associated with each way to indicate if a PTE cacheline is stored in the way.

Example 7. The processor of example 6 wherein the cache manager is to determine an eviction candidate for a first set based on a least recently used (LRU) eviction policy, the cache manager to exclude certain ways from the LRU eviction policy based on the way mask.

Example 8. The processor of example 7 wherein the cache manager is to exclude ways from consideration which are indicated in the way mask to store PTE cachelines.

Example 9. The processor of example 2 wherein the cache manager is to increase the eviction rate or probability of PTE cacheline evictions for PTE cachelines without a cache hit within a pre-defined window.

Example 10. A method comprising: storing, in an N-way set associative cache, page table entry (PTE) cachelines and non-PTE cachelines; and implementing a PTE-aware eviction policy for evicting cachelines from the cache, the PTE-aware eviction policy comprising reducing a rate at which the PTE cachelines are evicted to service non-PTE cacheline fills.

Example 11. The method of example 10 further comprising: evicting PTE cachelines from a set at a first rate or with a first probability if a number of PTE cachelines in the set is less than a first threshold; and evicting PTE cachelines from the set at a second rate greater than the first rate or with a second probability greater than the first probability if the number of PTE cachelines in the set is greater than the first threshold.

Example 12. The method of example 11 further comprising: evicting PTE cachelines from the set at a third rate greater than the second rate or with a third probability greater than the second probability if a number of PTE cachelines in the set is greater than a third threshold.

Example 13. The method of example 12 wherein the first probability is in a range of 0% to 1%, the second probability is in a range of 5% to 20%, and the third probability is in a range of 95% to 100%.

Example 14. The method of example 10 wherein each cacheline is to include a PTE bit to differentiate between the PTE cachelines and the non-PTE cachelines, the method further comprising: determining the number of PTE cachelines in the set based on a number of PTE bits set to 1 in the set.

Example 15. The method of example 14 further comprising: generating a way mask with a bit value associated with each way to indicate if a PTE cacheline is stored in the way.

Example 16. The method of example 15 further comprising: determining an eviction candidate for a first set based on a least recently used (LRU) eviction policy, the cache manager to exclude certain ways from the LRU eviction policy based on the way mask.

Example 17. The method of example 16 wherein ways are excluded from consideration which are indicated in the way mask to store PTE cachelines.

Example 18. The method of example 11 wherein the cache manager is to increase the eviction rate or probability of PTE cacheline evictions for PTE cachelines without a cache hit within a pre-defined window.

Example 19. A machine-readable medium having program code stored thereon which, when executed by a machine, causes the machine to perform the operations of: storing, in an N-way set associative cache, page table entry (PTE) cachelines and non-PTE cachelines; and implementing a PTE-aware eviction policy for evicting cachelines from the cache, the PTE-aware eviction policy comprising reducing a rate at which the PTE cachelines are evicted to service non-PTE cacheline fills.

Example 20. The machine-readable medium of example 19 further comprising program code to cause the machine to perform the operations of: evicting PTE cachelines from a set at a first rate or with a first probability if a number of PTE cachelines in the set is less than a first threshold; and evicting PTE cachelines from the set at a second rate greater than the first rate or with a second probability greater than the first probability if the number of PTE cachelines in the set is greater than the first threshold.

Example 21. The machine-readable medium of example 20 further comprising program code to cause the machine to perform the operations of: evicting PTE cachelines from the set at a third rate greater than the second rate or with a third probability greater than the second probability if a number of PTE cachelines in the set is greater than a third threshold.

Example 22. The machine-readable medium of example 21 wherein the first probability is in a range of 0% to 1%, the second probability is in a range of 5% to 20%, and the third probability is in a range of 95% to 100%.

Example 23. The machine-readable medium of example 19 wherein each cacheline is to include a PTE bit to differentiate between the PTE cachelines and the non-PTE cachelines, the machine-readable medium further comprising program code to cause the machine to perform the operations of: determining the number of PTE cachelines in the set based on a number of PTE bits set to 1 in the set.

Example 24. The machine-readable medium of example 23 further comprising program code to cause the machine to perform the operations of: generating a way mask with a bit value associated with each way to indicate if a PTE cacheline is stored in the way.

Example 25. The machine-readable medium of example 24 further comprising program code to cause the machine to perform the operations of: determining an eviction candidate for a first set based on a least recently used (LRU) eviction policy, the cache manager to exclude certain ways from the LRU eviction policy based on the way mask.

Example 26. The machine-readable medium of example 25 wherein ways are excluded from consideration which are indicated in the way mask to store PTE cachelines.

Example 27. The machine-readable medium of example 20 wherein the cache manager is to increase the eviction rate or probability of PTE cacheline evictions for PTE cachelines without a cache hit within a pre-defined window.

As described herein, instructions may refer to specific configurations of hardware such as application specific integrated circuits (ASICs) configured to perform certain operations or having a predetermined functionality or software instructions stored in memory embodied in a non-transitory computer readable medium. Thus, the techniques shown in the Figures can be implemented using code and data stored and executed on one or more electronic devices (e.g., an end station, a network element, etc.). Such electronic devices store and communicate (internally and/or with other electronic devices over a network) code and data using computer machine-readable media, such as non-transitory computer machine-readable storage media (e.g., magnetic disks; optical disks; random access memory; read only memory; flash memory devices; phase-change memory) and transitory computer machine-readable communication media (e.g., electrical, optical, acoustical or other form of propagated signals - such as carrier waves, infrared signals, digital signals, etc.). In addition, such electronic devices typically include a set of one or more processors coupled to one or more other components, such as one or more storage devices (non-transitory machine-readable storage media), user input/output devices (e.g., a keyboard, a touchscreen, and/or a display), and network connections. The coupling of the set of processors and other components is typically through one or more busses and bridges (also termed as bus controllers). The storage device and signals carrying the network traffic respectively represent one or more machine-readable storage media and machine-readable communication media. Thus, the storage device of a given electronic device typically stores code and/or data for execution on the set of one or more processors of that electronic device. Of course, one or more parts of an embodiment of the invention may be implemented using different combinations of software, firmware, and/or hardware. Throughout this detailed description, for the purposes of explanation, numerous specific details were set forth in order to provide a thorough understanding of the present invention. It will be apparent, however, to one skilled in the art that the invention may be practiced without some of these specific details. In certain instances, well known structures and functions were not described in elaborate detail in order to avoid obscuring the subject matter of the present invention. Accordingly, the scope and spirit of the invention should be judged in terms of the claims which follow.

## Claims

1. A processor, comprising:
a plurality of cores, each core to execute instructions and process data;
a cache to be shared by a subset of the plurality of cores, the cache comprising an N-way set associative cache for storing page table entry (PTE) cachelines and non-PTE cachelines; and
a cache manager to implement a PTE-aware eviction policy for evicting cachelines from the cache, the PTE-aware eviction policy to reduce a rate at which the PTE cachelines are evicted to service non-PTE cacheline fills.

2. The processor of claim 1 wherein if a number of PTE cachelines in a set is less than a first threshold, the cache manager is to evict PTE cachelines from the set at a first rate or with a first probability and wherein if the number of PTE cachelines in a set is greater than the first threshold, the cache manager is to evict PTE cachelines from the set at a second rate greater than the first rate or with a second probability greater than the first probability.

3. The processor of claim 2 wherein if a number of PTE cachelines in the set is greater than a third threshold, the cache manager is to evict PTE cachelines from the set at a third rate greater than the second rate or with a third probability greater than the second probability.

4. The processor of claim 3 wherein the first probability is in a range of 0% to 1%, the second probability is in a range of 5% to 20%, and the third probability is in a range of 95% to 100%.

5. The processor of any of claims 1 to 4 wherein each cacheline is to include a PTE bit to differentiate between the PTE cachelines and the non-PTE cachelines, the cache manager to determine the number of PTE cachelines in the set based on a number of PTE bits set to 1 in the set.

6. The processor of claim 5 wherein the cache manager is to generate a way mask with a bit value associated with each way to indicate if a PTE cacheline is stored in the way.

7. The processor of claim 6 wherein the cache manager is to determine an eviction candidate for a first set based on a least recently used (LRU) eviction policy, the cache manager to exclude certain ways from the LRU eviction policy based on the way mask.

8. The processor of claim 7 wherein the cache manager is to exclude ways from consideration which are indicated in the way mask to store PTE cachelines.

9. The processor of any of claims 2 to 8 wherein the cache manager is to increase the eviction rate or probability of PTE cacheline evictions for PTE cachelines without a cache hit within a pre-defined window.

10. A method comprising:
storing, in an N-way set associative cache, page table entry (PTE) cachelines and non-PTE cachelines; and
implementing a PTE-aware eviction policy for evicting cachelines from the cache, the PTE-aware eviction policy comprising reducing a rate at which the PTE cachelines are evicted to service non-PTE cacheline fills.

11. The method of claim 10 further comprising:
evicting PTE cachelines from a set at a first rate or with a first probability if a number of PTE cachelines in the set is less than a first threshold; and evicting PTE cachelines from the set at a second rate greater than the first rate or with a second probability greater than the first probability if the number of PTE cachelines in the set is greater than the first threshold.

12. The method of claim 11 further comprising:
evicting PTE cachelines from the set at a third rate greater than the second rate or with a third probability greater than the second probability if a number of PTE cachelines in the set is greater than a third threshold.

13. The method of claim 12 wherein the first probability is in a range of 0% to 1%, the second probability is in a range of 5% to 20%, and the third probability is in a range of 95% to 100%.

14. The method of any of claims 10 to 13 wherein each cacheline is to include a PTE bit to differentiate between the PTE cachelines and the non-PTE cachelines, the method further comprising:
determining the number of PTE cachelines in the set based on a number of PTE bits set to 1 in the set.

15. The method of claim 14 further comprising:
generating a way mask with a bit value associated with each way to indicate if a PTE cacheline is stored in the way.
